# EUROPEAN PATENT SPECIFICATION

(11) **EP 3 680 803 B1**
(45) Date of publication and mention of the grant of the patent: **24.11.2021**
(21) Application number: 19219357.1
(22) Date of filing: 23.12.2019
(51) Int. Cl.: G06K 1/20, G06K 7/10

(54) **DATA STORAGE DEVICE AND DATA STORAGE METHOD**
DATENSPEICHERVORRICHTUNG UND DATENVERWALTUNGSVERFAHREN
DISPOSITIF ET SYSTÈME DE STOCKAGE DE DONNÉES

(30) Priority: 09.01.2019 JP 2019001950
(43) Date of publication of application: 15.07.2020
(73) Proprietor: Toshiba TEC Kabushiki Kaisha, Shinagawa-ku Tokyo 141-8562 (JP)
(72) Inventor: Koike, Yuki, Tokyo 141-8562 (JP); Oishi, Sadatoshi, Tokyo 141-8562 (JP)
(74) Representative: Hoffmann Eitle

(56) References cited:
- DE-A1-102004 019 069
- US-A1- 2014 035 733

## Description

### Field

Embodiments of the present invention relate to a data storage device and a data storage method.

### BACKGROUND

A data storage device writes data to an RF (Radio Frequency) tag, such as an RFID (Radio Frequency Identification) tag. Such a data storage device has various settable parameters, such as parameters related to the position of the RF tag, to be used in the writing of data to the RF tag by the data storage device.

It may be required to change these parameters of data storage device each time a new RF tag is to be written with data by the data storage device.

US 2014/035733 A1 relates to a RFID tag writing system having a conveying unit configured to convey a plurality of RFID tags, an antenna configured to transmit a first write signal towards the RFID tags and receive return signals generated by the RFID tags in response to the first write signal, and a controller configured to determine an intensity of a second write signal to be transmitted by the antenna based on intensities of the return signals.

DE 10 2004 019069 A1 relates to a printer used to print print media arranged on a carrier strip and provided with an RFID label, comprising a thermo transfer and/or thermo direct printing unit and an ink-jet printing unit.

### SUMMARY OF THE INVENTION

One of the objects of the present invention is to improve prior art techniques and overcome at least some of the prior art problems as for instance above illustrated. The problems are solved by a data storage device according to claim 1 and a label writer according to claim 12. Preferred embodiments are subject of the dependent claims.

### BRIEF DESCRIPTION OF THE DRAWINGS

FIG. 1 is a block diagram of a data storage device according to an embodiment.
FIG. 2 depicts a print head according to an embodiment.
FIG. 3 depicts a part of a roll label according to an embodiment.
FIG. 4 depicts a part of a roll label according to an embodiment.
FIG. 5 depicts a label according to an embodiment.
FIG. 6 is a block diagram of an RFID chip according to an embodiment.
FIG. 7 is a flowchart depicting aspects of an operation of a data storage device according to an embodiment.

### DETAILED DESCRIPTION

In general, according to an embodiment, a data storage device includes a reader/writer for communicating wirelessly with an radio-frequency (RF) tag and a memory storing parameters in association with characteristic information of the RF tag. The parameters are used in communicating wirelessly with the RF tag. A sensor is configured to obtain characteristic information of the RF tag. A processor is configured to acquire the characteristic information of the RF tag through the sensor. The processor is configured to obtain a parameter corresponding to the acquired characteristic information from the memory or otherwise. The processor then communicates wirelessly with the RF tag through the reader/writer according to the parameter.

Hereinafter, an example embodiment will be described with reference to the accompanying drawings.

A data storage device 1 has settable parameters which can be necessary to determine a particular position of the RF tag to use when writing data to the RF tag. The settable parameters may also relate to conditions for performing processing on (for example, writing of data to) a RF tag 44. The data storage device 1 communicates in wireless with the RF tag 44 based on the set parameters, and may also perform processing on the RF tag according to the parameters that are set.

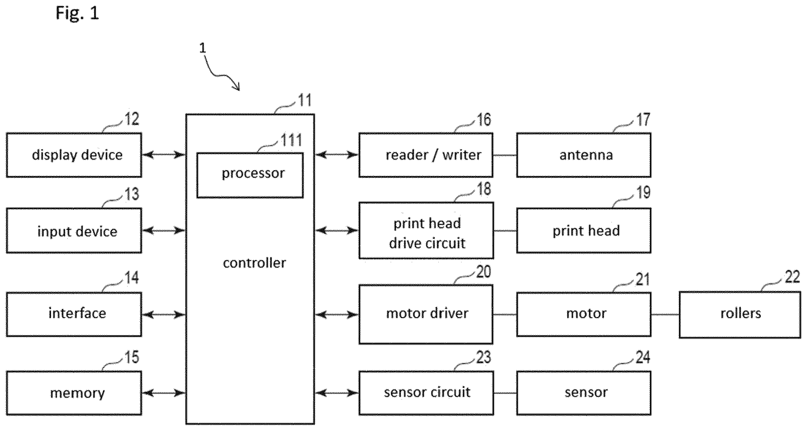

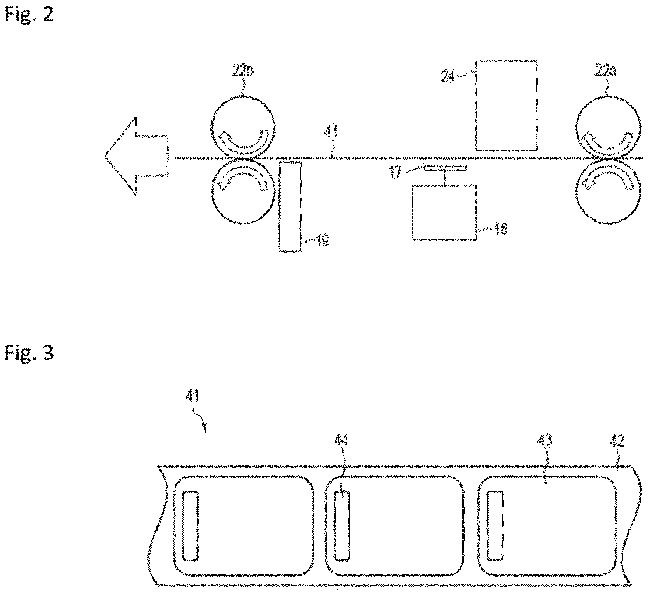

With reference to FIG. 1 and FIG. 3, a label roll (roll of labels) 41 including an RF tag 44 is loaded on data storage device 1. The data storage device 1 conveys a part of the label roll 41 to a predetermined position and then writes data in the RF tag 44 of a particular label 43 on the label roll 41. The data storage device 1 writes data in the RF tag 44 based on an input/instruction by an operator. Also, the data storage device 1 prints an image on the label 43. The data storage device 1 then conveys the printed/written label 43 to a discharge position to thereby discharge the label 43 from the data storage device 1.

FIG. 1 is a block diagram showing an example of the configuration of the data storage device 1. As shown in FIG. 1, the data storage device 1 includes a controller 11, a display device 12, an input device 13, an interface 14, a memory 15, a reader/writer 16, an antenna 17, a print head drive circuit 18, a print head 19, a motor driver 20, a motor 21, rollers 22, a sensor circuit 23, and a sensor 24.

The controller 11, the display device 12, the input device 13, the interface 14, the memory 15, the reader/writer 16, the print head drive circuit 18, the motor driver 20, and the sensor circuit 23 are connected to each other via a data bus.

The reader/writer 16 and the antenna 17 are electrically connected to each other. The print head drive circuit 18 and the print head 19 are electrically connected to each other. The motor driver 20 and the motor 21 are electrically connected to each other. The motor 21 and the rollers 22 are mechanically connected to each other. The sensor circuit 23 and the sensor 24 are electrically connected to each other.

The data storage device 1 may have additional components or may have fewer components than what is shown in FIG. 1.

The controller 11 controls the overall operation of the data storage device 1. The controller 11 comprises a processor 111.

The processor 111 of the controller 11 controls the entire operation of the data storage device 1, by executing one or more programs stored in memory accessible by the processor 111. The processor 111 may include an internal memory and various interfaces. The processor 111 performs various processing by executing one or more programs stored in advance in the internal memory or the memory 15.

Some of the various functions performed by the processor 111 may be executed by hardware circuitry. In this case, the processor 111 controls the functions performed by the hardware circuitry.

The display device 12 displays various kinds of information under the control of the processor 111. For example, the display device 12 is composed of a liquid crystal display.

The input device 13 receives various inputs from an operator. The input device 13 sends a signal indicating reception of an input from the operator to the processor 111. The input device 13 can be composed of a keyboard, a numeric keypad, and/or a touch panel. When the input device 13 comprises a touch panel, such a touch panel may be formed integrally with the display device 12.

The interface 14 is an communication interface for transmitting and receiving data to and from an external device. For example, the interface 14 transmits and receives data to and from an external device via a network such as a LAN (Local Area Network). The interface 14 receives data to be written in the RF tag(s) from the external device. In some examples, the interface 14 may include or be a universal serial bus (USB) port.

The memory 15 is a rewritable nonvolatile memory. The memory 15 may store programs executed by the processor 111 and associated data for processor 111 operations.

The memory 15 stores a parameter database of parameters to be used in performing processing on a RF tag 44.

The reader/writer 16 communicates wirelessly with the RF tag 44 through the antenna 17. The reader/writer 16 emits a transmission wave through the antenna 17. The reader/writer 16 also receives a response wave from the RF tag 44 through the antenna 17 (the response wave is emitted from the RF tag 44 in response to the transmission wave), and demodulates the received response wave to obtain data from the RF tag 44.

The reader/writer 16, for example, reads identification information from a RF tag 44 (for example, Tag ID (TID)). The reader/writer 16 may measure the intensity of the radio wave received from a RF tag 44.

The reader/writer 16 transmits data to the RF tag 44 based on a signal from the controller 11. The reader/writer 16, for example, transmits a signal encoded with the write data to the RF tag 44 via the antenna 17.

The antenna 17 enables the reader/writer 16 to communicate wirelessly with the RF tag 44. The antenna 17 is disposed adjacent to a conveyance path on which the RF tag 44 is conveyed. The antenna 17 may be a directional antenna for transmitting radio waves in a particular or preferred direction.

The print head drive circuit 18 provides drive control for the print head 19 in accordance with a signal from the controller 11. The print head drive circuit 18 transmits electrical power or a control signal to the print head 19.

The print head 19 (which may also be referred to as a printer) prints an image on a label 43 based on the control of the print head drive circuit 18. For example, the print head 19 comprises an ink jet head for ejecting ink droplets. The print head 19 may print a monochrome image on the label 43 or may print a color image on the label 43. When the label 43 comprises thermal paper, the print head 19 can heat the label 43 to print an image thereon.

The motor driver 20 drives the motor 21 in accordance with a signal from the controller 11. The motor driver 20 provides electric power and control signals to the motor 21.

The motor 21 drives the rollers 22 based on the control of the motor driver 20. For example, the motor 21 is a stepping motor.

The rollers 22 unroll the label roll 41 that includes a plurality of labels 43. The rollers 22 is rotated by a driving force from the motor 21. The rollers 22 rotates to convey the label roll 41 in a predetermined direction.

The sensor circuit 23 drives the sensor 24 in accordance with a signal from the controller 11. The sensor circuit 23 transmits a power or control signal to the sensor 24.

The sensor 24 reads marks 45 that are formed in the label roll 41, which will be described later. When a mark 45 is read, the sensor 24 transmits a predetermined signal to the sensor circuit 23. For example, the sensor 24 may be an optical sensor.

Further, the sensor 24 measures a reception intensity, reflectance and transmittance of a response wave transmitted from the RF tag 44.

The reception intensity indicates the intensity of the response wave transmitted from the RF tag 44 embedded in the label 43. That is, the reception intensity of the label 43 is expressed by a ratio between the transmission wave transmitted by the reader/writer 16 and the response wave transmitted from the RF tag 44 when the RF tag 44 is at a predetermined position.

The sensor 24 is provided with an antenna. The sensor 24 measures the intensity of the response wave by using an antenna and measures the reception intensity of the label 43.

The reflectance of the label 43 indicates the amount of light reflected by the label 43. That is, the reflectance of the label 43 is a ratio between the amount of light irradiated on one side of the label 43 and the amount of light reflected by the label.

The transmittance of the label 43 indicates the amount of light passing through the label 43. That is, the transmittance of the label 43 is a ratio between the amount of light irradiated on one side of the label 43 and the amount of light transmitted to the other side.

The sensor 24 includes a light source and an optical sensor located facing with the light source. The sensor 24 uses an optical sensing method to calculate the reflectance and transmittance of the label 43 based on the amount of the light reflected from the label 43 and the amounts of the transmitted light.

FIG. 2 is a diagram showing a position of the antenna 17. As shown in FIG. 2, the rollers 22 includes rollers 22a and 22b. The rollers 22a and 22b are arranged with a predetermined interval therebetween. The label roll 41 is conveyed from the roller 22a to the roller 22b. Here, it is assumed that the roller 22a is upstream and the roller 22b is downstream in a conveying direction of the label roll 41.

Each of rollers 22a and 22b is composed of two rollers for holding and conveying the label roll 41. Here, it is assumed that the label roll 41 is set so that an upper surface faces downward.

The sensor 24 is arranged at downstream of the rollers 22a with respect to a conveying direction of the label roll 41. The sensor 24 detects a mark 45 on a back surface of the label roll 41. Further, the sensor 24 measures the reflectance and transmittance of the label 43. Further, when the RF tag 44 of the label 43 communicates with the reader/writer 16, the sensor 24 measures the intensity of the response wave of the RF tag 44.

The antenna 17 is arranged downstream of the sensor 24 with respect to a conveying direction of the label roll 41. The antenna 17 is arranged facing to the sensor 24. That is, the antenna 17 is arranged so as to contact with the surface of the label roll 41.

The print head 19 is located downstream of the antenna 17 with respect to a conveying direction of the label roll 41. Print head 19 is positioned to contact the upper surface of label roll 41. That is, the print head 19 forms an image on the surface of the label on the label roll 41.

The roller 22b is positioned downstream of the print head 19 with respect to a conveying direction of the label roll 41.

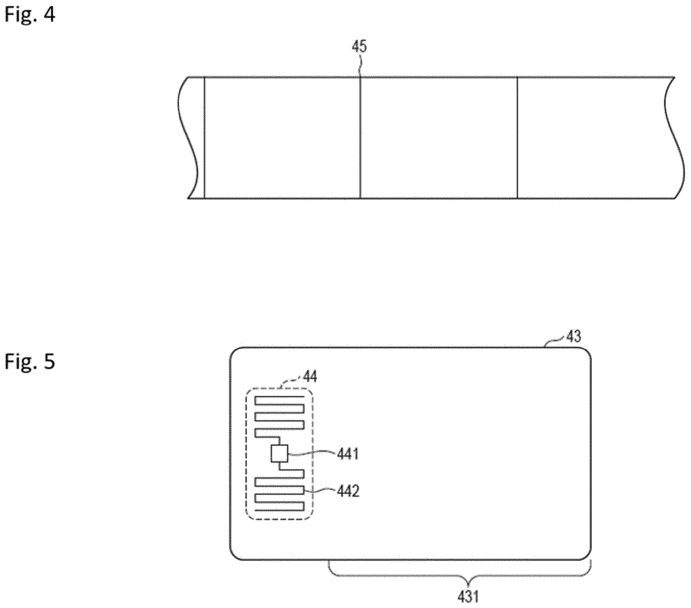

Next, the label roll 41 will be described. FIG. 3 shows an example configuration of the surface of the label roll 41. FIG. 4 shows an example of a configuration of the back surface of the label roll 41.

The label roll 41 has a plurality of labels 43 formed in a row. Here, the 41 is formed so as to extend parallel to both lateral sides of the label 43.

The label roll 41 comprises a base paper 42 and the labels 43 disposed on the base paper 42.

The base paper 42 supports a plurality of labels 43. There is a fixed interval between each of the labels 43. The labels 43 are 43 removably adhere on the base paper 42. For example, the base paper 42 may be made of a material such as paper, plastic or vinyl.

The label 43 is a material containing RF tag 44. The label 43 in this example is formed in a rectangular shape. Each of the labels 43 comprises a stacked plurality of layers. A label 43 has a RF tag 44 disposed between the stacked layers. For example, the label 43 may be made by a material such as paper, plastic or vinyl. The label 43 may be made of the same material as the base paper 42, or may be made of a different material.

The label roll 41 (base paper 42) has marks 45 on its back surface. The marks 45 correspond to the position of each of the labels 43. Here, in this example, each mark 45 is formed at an edge portion of the labels 43.

Next, the labels 43 will be described. FIG. 5 shows an example of the configuration of a label 43. As shown in FIG. 5, the label 43 comprises a RF tag 44 and a printing area 431. In some examples, the label 43 may also have additional components not shown in FIG. 5 or may have fewer components.

The RF tag 44 is disposed at a predetermined position of the label 43. In the example shown in FIG. 5, the RF tag 44 is placed on the left side of the label 43. In other examples, the RF tag 44 may be disposed on the right side of the label 43 or may be disposed at a central portion of the label 43. In general, the position at which the RF tag 44 is disposed is not limited to any specific configuration requirement.

The RF tag 44 is embedded between different layers to form the label 43. Each label 43 includes at least one RF tag 44. The RF tag 44 is to be written with predetermined data sent wirelessly from the external device and transmits this predetermined data to the external device upon interrogation or the like.

Here, the RF tag 44 is an RFID tag. The RF tag 44 conforms to so-called Gen2 protocols (EPC Radio-Frequency Identity Protocols Generation-2 UHF RFID, Specification for RFID Air Interface Protocol for Communications).

As shown in FIG. 5, the RF tag 44 includes an RFID chip 441 and an antenna 442.

The RFID chip 441 controls functions of the RF tag 44.

The antenna 442 communicates wirelessly with the external device. The antenna 442 is also used to receive electric power from the external device. The antenna 442 may be formed in a mesh shape in a predetermined area. Alternatively, the antenna 442 may be formed in an annular shape in a predetermined area.

The RF tag 44 is activated by power received from the external device in a non-contact manner. Upon receiving the power, the RF tag 44 becomes ready for an operation. The RF tag 44 receives radio wave communications from the external device via antenna 442 and a modulation/demodulation circuit, and so on. Upon receiving the radio waves, the RF tag 44 generates electric power and an internal clock to generates clock signals as part of an activation operation.

When the RF tag 44 is activated, the RFID chip 441 is able to communicate with the external device through the antenna 442. The RFID chip 441 reflects and collects the radio waves, thereby changing the impedance of the antenna 442.

The RFID chip 441 receives an access password or the like from the reader/writer 16 through the antenna 442, and establishes communication with the reader/writer 16. The RFID chip 441 transmits and/or receives predetermined data to and from the reader/writer 16 through the antenna 442.

In general, the configuration of the RF tag 44 is not limited to any specific configuration.

The printing area 431 is an area where various images can be printed by the print head 19. The printing area 431 may be formed of a thermal paper or the like.

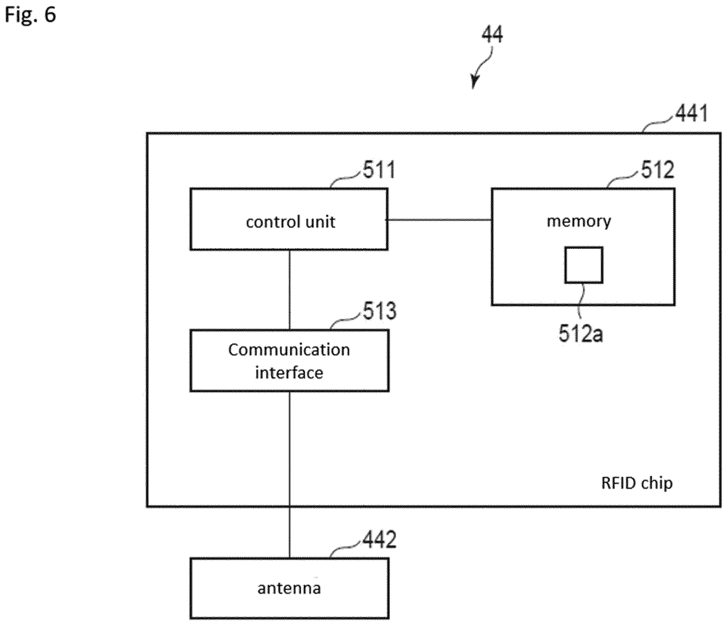

FIG. 6 is a block diagram showing an example of the configuration of the RF tag 44. As shown in FIG. 6, the RF tag 44 includes an RFID chip 441 and an antenna 442. Note that the RF tag 44 may also have additional components not shown in FIG. 6 or may have fewer components.

The RFID chip 441 includes a control unit 511, a memory 512, and a communication interface 513.

The control unit 511 has a function of controlling the overall operation of the RFID chip 441. The control unit 511 may include an internal cache memory, various interfaces, and the like. The control unit 511 executes various processes by executing a program stored in an internal memory or a non-internal memory. The control unit 511 may be or comprise a processor running a computer program stored in memory. Further, the control unit 511 may be or comprise hardware such as a sequencer.

The memory 512 is a nonvolatile memory capable being written with data. The memory 512 stores various data on the basis of the operations of the control unit 511. Also, the memory 512 may store data for control in advance according to the intended use of the RF tag 44. The memory 512 may also temporarily store data being processed or utilized by the control unit 511 in its various operations.

The memory 512 includes a storage area 512a for storing a tag identification (TID).

The communication interface 513 is used for communicating with the external device through the antenna 442. The communication interface 513 may include a power supply unit or the like for re-supplying electric power received from the external device.

The TID is one type of data stored in the memory of the RF tag 44 that conforms to the Gen2 protocols. In particular, in this context the TID is an ID that uniquely identifies a RF tag 44. The TID is an ID that cannot be overwritten or changed by a user of the RF tag 44. The TID is stored in the storage area 512a at the time of manufacturing the RF tag 44.

The TID may be stored in the storage area 512a in such a manner that it cannot be physically rewritten. The TID may likewise not be set to be rewritable by software or the like, such as an OS (operating system) for controlling the control unit 511.

For example, the TID may indicate the type of RF tag 44 in a predetermined portion (e.g., a predetermined digit or digits of a code number). For example, the first half portion of the TID may indicate the type (category, class, group, etc.) of the RF tag 44. The latter half portion of the TID may be a numerical value unique to the particular RF tag 44.

The control unit 511 has a function of transmitting the TID to the data storage device 1.

The control unit 511 receives a command through the antenna 442 requesting the TID. When this command is received, the control unit 511 acquires the TID from the storage area 512a. After the TID is acquired, the control unit 511 transmits a response including the TID to the data storage device 1 through the antenna 442.

As described above, a parameter database stores parameters associated with performing processing on the RF tag 44. In this example, the parameter database stores parameters for writing data in the RF tag 44.

The parameter database stores tag characteristic information and parameters in association with each other.

The characteristic information is for identifying the type of the RF tag 44 being written. For example, the characteristic information identifies a manufacturer, a model number, a lot number, or the like of the RF tag 44.

The characteristic information is acquired by the reader/writer 16 or the sensor 24. The characteristic information may include a plurality of different elements. For example, the characteristic information may include the reception intensity or TID of the RF tag 44, the reflectance or transmittance of the label 43, or the distance between the RF tags 44 on the label roll 41 (label pitch). The characteristic information may be stored or represented as a numerical value of a predetermined digit of the TID instead of the entire TID.

The structure of the characteristic information is not limited to any specific configuration.

A stored parameter relates to communication between the reader/writer 16 and RF tags 44 of the particular type indicated by the characteristic information. The parameter provides a setting for the data storage device 1 to use in performing processing on the RF tag 44. That is, the processor 111 performs a processing on the RF tag 44 according to the parameters. In this example, the processor 111 writes data in the RF tag 44 in accordance with parameters.

For example, the parameter is used for setting a communication position of the RF tag 44, a strength of the radio wave emitted from the reader/writer 16, and/or an intensity threshold value.

The reader/writer 16 performs wireless communication with the RF tag 44 at the set communication position. That is, the RF tag 44 is placed at an appropriate position for wireless communication. A parameter for the communication position of the RF tag 44 can be expressed as a conveying distance to be supplied by movement of rollers 22 to convey the label 43 after the sensor 24 detects the corresponding mark 45 for the label 43.

A parameter for strength of the radio wave emitted from the reader/writer 16 indicates the intensity of the radio wave to be emitted from the reader/writer 16 through the antenna 17 when the data is being written in the RF tag 44.

A parameter for the intensity threshold value provides a threshold value of the reception intensity required when the reader/writer 16 writes the data in the RF tag 44.

The possible parameters are not limited to any specific configuration or types.

Next, functions of the data storage device 1 will be described. The functions performed by the data storage device 1 can be provided by a program stored in the controller 11 or the memory 15 which is executed by the processor 111.

First, the processor 111 acquires characteristic information of the RF tag 44 on the label 43 being carried by the rollers 22. The characteristic information is obtained by using the reader/writer 16 or the sensor 24.

Here, it is assumed that the user has loaded or fed a label roll 41 on to the rollers 22.

The processor 111 controls to drive rollers 22 to convey the label roll 41 to a predetermined position. The processor 111 controls the conveyance of the label roll 41 until the sensor 24 detects the mark 45.

When the label roll 41 is conveyed to the predetermined position, the processor 111 acquires characteristic information of the RF tag 44 of the label roll 41 by operations of the sensor 24 and/or the reader/writer 16.

To acquire a reception intensity, the processor 111 transmits a transmission wave to the RF tag 44 from the reader/writer 16, and then measures the intensity of the response wave of the RF tag 44 as the characteristic reception intensity by using the sensor 24.

To acquire a reflectance or a transmittance, the processor 111 calculates the characteristic reflectance or transmittance of the RF tag 44 (or the label roll 41) using the sensor 24.

When acquiring a TID, the processor 111 controls rollers 22 to convey the label roll 41 so that the RF tag 44 is at a position where the antenna 17 is capable of communicating wirelessly with the RF tag 44. Once the RF tag 44 has been conveyed to the position where wireless communication is possible, the processor 111 transmits a transmission wave for acquiring the TID via the reader/writer 16 to the RF tag 44. The processor 111 receives the response wave through the reader/writer 16, and then acquires the TID from the response wave. When acquiring the TID, the processor 111 may also measure reception intensity.

When the processor 111 is acquiring a characteristic label pitch, the processor 111 controls rollers 22 to move the label roll 41, and during this movement process measures the transmittance based on detection result of the sensor 24. The transmittance of the label roll 41 varies (e.g., decreases) as the RF tag 43 is being conveyed in relation to the sensor 24. The processor 111 calculates the apparent distance between adjacent two RF tags 44 (the label pitch) based on changes in transmittance when the label roll 41 is being conveyed relative to the sensor 24.

The method for acquiring of various characteristic information is not necessarily limited to any specific method.

The processor 111 acquires various parameters corresponding to the acquired characteristic information from the parameter database.

The processor 111 extracts parameters corresponding to the acquired characteristic information from the parameter database. The processor 111 searches within the parameter database based on the various elements of acquired characteristic information. It should be noted that the processor 111 may in some instances determine that the acquired characteristic information coincides with entries/values in the parameter database even if there is some difference between the acquired and stored values when the difference is equal to or less than some predetermined threshold value. The processor 111 may also adjust the comparison method in accordance with different elements/parameters.

Also, the processor 111 may search in the parameter database based on a plurality of elements in the characteristic information, and extract other components of characteristic information stored in the parameter database if a number of the elements included in the characteristic information stored in the parameter database exceeds a predetermined number for meeting a search condition or the like.

The processor 111 may also retrieve additional characteristic information (feature values) from the parameter database in accordance with a predetermined algorithm. The manner in which the processor 111 searches for characteristic information is not limited to any particular method.

Once the characteristic information is extracted from the parameter database or otherwise acquired, the processor 111 acquires a parameter corresponding to the characteristic information from the parameter database.

The processor 111 can also generate parameters for performing processing on the RF tag 44.

When a particular parameter corresponding to the acquired characteristic information is not in the parameter database, the processor 111 can generate a parameter value for performing processing on the RF tag 44. In this case, the processor 111 generates parameter values necessary for writing data in the RF tag 44.

The processor 111 controls rollers 22 to convey the RF tag 44, and acquires the reception intensity of the RF tag 44 during this movement. The processor 111 can set parameters for the communication position or the like of the RF tag 44 based on the received reception intensity. For example, the processor 111 sets parameters to match the RF tag 44 position where the reception intensity is highest as the communication position of the RF tag 44.

The processor 111 can dynamically vary the output strength of the reader/writer 16 and measure the incidence of errors in communication with the RF tag 44. The processor 111 determines the minimum output intensity necessary for an appropriate communication with the RF tag 44, a threshold value of the reception intensity, or the like based on the incidence of the errors in communication with the RF tag 44 at different output strengths of the reader/writer 16.

The processor 111 may establish or generate parameters using a variety of existing methods. The method by which the processor 111 establishes or generates parameters is not limited to any particular method.

When a parameter is established, the processor 111 can store the acquired characteristic information and the corresponding parameter in the parameter database.

Further, the processor 111 performs processing on the RF tag 44 on the basis of the obtained (or generated) parameters.

The processor 111 operates in accordance with the acquired parameters.

The processor 111 conveys the RF tag 44 (label roll 41) to a predetermined position using the rollers 22 in accordance with the acquired parameters. The processor 111 sets the intensity of the transmission wave emitted from the reader/writer 16 in accordance with the acquired parameters. Also, the processor 111 sets a threshold value of the reception intensity in the reader/writer 16 according to the acquired parameters.

Here, the processor 111 writes predetermined data to in the RF tag 44. The processor 111 emits the transmission wave that is generated by modulating a command to store the data in the RF tag 44.

The processor 111 also writes data in the other RF tags 44 of the same type according to the previously acquired parameters. For example, the processor 111 may write data in the subsequent RF tag 44 in accordance with the acquired parameters until a new roll of labels 41 is loaded.

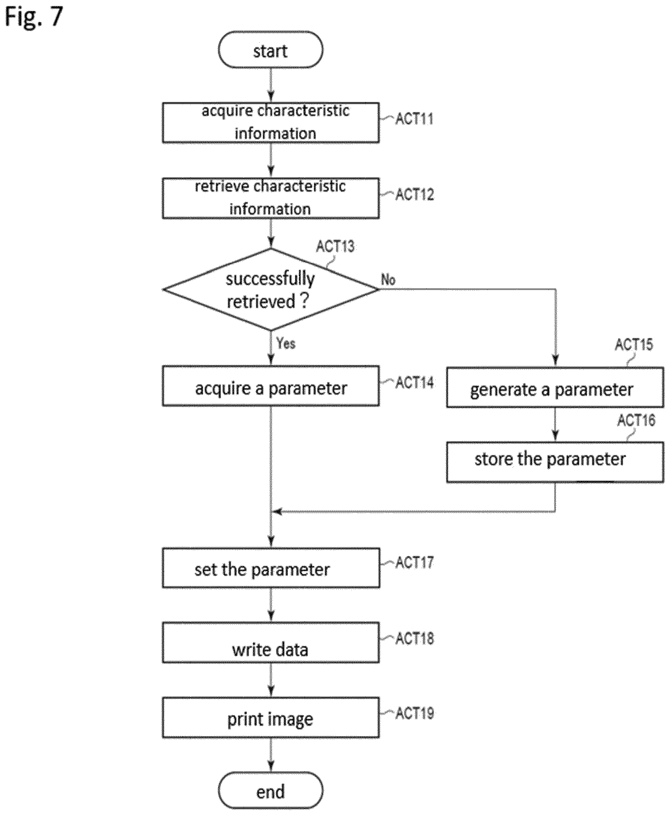

FIG. 7 is a flowchart for explaining an example of the operation of the data storage device 1. Here, it is assumed that the user has set/loaded the label roll 41 in the rollers 22.

First, the processor 111 of the data storage device 1 acquires characteristic information of a RF tag 44 embedded in the label roll 41 (ACT 11). Once the characteristic information is acquired, the processor 111 retrieves additional feature information from the parameter database based on the acquired characteristic information (ACT 12).

When it is determined that the feature information corresponding to the acquired characteristic information has been successfully retrieved (ACT 13, YES), the processor 111 acquires a parameter (or parameters) corresponding to the retrieved feature information from the parameter database (ACT 14).

When it is determined that the search for feature information corresponding to the acquired characteristic information has failed (ACT 13, NO), the processor 111 generates a parameter of the RF tag 44 (ACT 15) as necessary. After the parameter is generated/established, the processor 111 stores the acquired characteristic information and the parameter(s) in association in the parameter database (ACT 16).

If a parameter is acquired from the parameter database (ACT 14), or if the acquired characteristic information and the generated parameter have been stored in the parameter database in association each other (ACT 16), the processor 111 sets the acquired (or generated) parameter (ACT 17).

After the parameter has been set, the processor 111 then writes data in the RF tag 44 using the reader/writer 16 according to the parameter(s) (ACT 18). After the data is stored in the RF tag 44, the processor 111 controls the print head 19 (or printer unit) to print an image on the label 43(ACT 19) . After the image is printed on the label 43, the processor 111 terminates the operation.

The sensor 24 may be disposed downstream of the antenna 17. In this case, the processor 111 may return to the position of the antenna 17 after the RF tag 44 has been moved to the position of the sensor 24 by means of the rollers 22.

The processor 111 may also read data from the RF tag 44 using the reader/writer 16 according to set parameters.

In some examples, the controller 11 may store a parameter database.

Also, the data storage device 1 may include a camera or other type of imaging device for photographing the label roll 41 or the labels 43. In this case, the characteristic information stored in the parameter database may include a captured image of the label roll 41 or the label 43, or a feature value from the captured image. The processor 111 may be controlled to capture images of the label roll 41 or the label 43 using a camera and use information/values from the captured images to obtain characteristic information.

In some examples, the rollers 22 may directly convey the labels 43 without the presence of a label roll 41.

The data storage device 1 does not have to include the print head drive circuit 18 and the print head 19 in all examples.

In some examples, the antenna 17 may be movable. Likewise, in some examples, the sensor 24 may be movable.

The data storage device 1 configured as described above acquires characteristic information for specifying the type of RF tag. The data storage device 1 then acquires a parameter (or parameters) corresponding to the acquired characteristic information. The data storage device 1 can write data to the RF tag according to the acquired parameter(s). As a result, the data storage device 1 can store the data in the RF tags of the same type without generating the parameter(s) for each new RF tag of the same type.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the scope of the present invention as defined by the appended claims.

## Claims

1. A data storage device (1), comprising:
a reader/writer (16) for communicating wirelessly with an RF tag (44);
a memory (15) storing parameters in association with characteristic information associated with the RF tag (44), the parameters to be used in communicating wirelessly with the RF tag (44) ;
a sensor (24) configured to obtain characteristic information associated with the RF tag; **characterized in that** the data storage device further comprises
a processor (111) configured to:
acquire the characteristic information associated with the RF tag (44) through the sensor,
retrieve feature information from the memory (15) based on the acquired characteristic information;
if the feature information is successfully retrieved, acquire a parameter corresponding to the acquired characteristic information from the memory (15), and
communicate wirelessly with the RF tag (44) through the reader/writer according to the acquired parameter.

2. The data storage device (1) according to claim 1,
wherein the acquired characteristic information is at least one a reception intensity of the RF tag, a reflectance value of a label including the RF tag, a transmittance value of the label, or a label pitch for a roll of labels (41) including the label.

3. The data storage device (1) according to any of claims 1 to 2, further comprising:
a printer (19) to print an image on a label, wherein the RF tag (44) is embedded in the label.

4. The data storage device (1) according to any of claims 1 to 3, further comprising:
an antenna (17) connected to the reader/writer (16) .

5. The data storage device (1) according to any of claims 1 to 4, wherein the characteristic information comprises a tag ID for the RF tag (44).

6. The data storage device (1) according to any of claims 1 to 5, further comprising:
a printer (19) for printing images on a label in which the RF tag (44) is embedded; and
rollers (22) for conveying the label along a conveyance path from the sensor (24) to the printer (19), wherein preferably the rollers (22) comprise:
a first set of rollers; and
a second set of rollers downstream of the first set of rollers with respect to a conveying direction of the label along the conveyance path.

7. A data storage method for RF tags (44) embedded in labels, the method comprising:
acquiring (act11) characteristic information associated with an RF tag via a sensor or a tag reader/writer;
retrieving feature information from the memory (15) based on the acquired characteristic information;
if the feature information is successfully retrieved, obtaining a parameter (act14) corresponding to the characteristic information, the parameter corresponding to a setting for wirelessly communication with the RF tag via the tag reader/writer (16); and
wirelessly communicating with the RF tag (44) through the tag reader/writer with the setting set according to the obtained parameter.

8. The method according to claim 7, wherein data is written to RF tag via wireless communication through the tag reader/writer.

9. The method according to claim 7 or 8 wherein the characteristic information is at least one a reception intensity of the RF tag, a reflectance value of a label in which the RF tag is embedded, a transmittance value of the label, or a label pitch of labels on a label roll including the label.

10. The method according to any of claims 7 to 9, wherein the sensor is a camera configured to obtain images of a label in which the RF tag is embedded.

11. The method according to any of claims 7 to 10,
wherein the RF tag is embedded in a label on a label roll.

12. A label writer, comprising:
a reader/writer for communicating wirelessly with an RF tag embedded in a label;
rollers (22) configured to convey the label along a conveyance path;
a sensor configured to obtain characteristic information associated with the RF tag;
a memory storing RF tag writing parameters in association with characteristic information associated with the RF tag, the parameters to be used for writing data to the RF tag;
**characterized in that** the label writer further comprises
a processor configured to:
acquire characteristic information associated the RF tag through the sensor and the reader/writer,
retrieve feature information from the memory (15) based on the acquired characteristic information;
if the feature information is successfully retrieved, obtain a parameter corresponding to the acquired characteristic information, and
write data to the RF tag using the reader/writer and the obtained parameter.

13. The label writer according to claim 12 wherein the label is on a label roll including a plurality of labels.

## Patentansprüche

1. Datenspeichervorrichtung (1), umfassend:
einen Leser/Schreiber (16) zur drahtlosen Kommunikation mit einem RF-Tag (44);
einen Speicher (15), der Parameter in Verbindung mit charakteristischen Informationen speichert, die dem RF-Tag (44) zugeordnet sind, wobei die Parameter bei der drahtlosen Kommunikation mit dem RF-Tag (44) verwendet werden sollen;
einen Sensor (24), der konfiguriert ist, um charakteristische Informationen zu erhalten, die dem RF-Tag zugeordnet sind;
**dadurch gekennzeichnet, dass** die Datenspeichervorrichtung weiter umfasst
einen Prozessor (111), der konfiguriert ist zum:
Erfassen der charakteristischen Informationen, die dem RF-Tag (44) zugeordnet sind, durch den Sensor,
Abrufen von Merkmalsinformationen aus dem Speicher (15) basierend auf den erfassten charakteristischen Informationen;
wenn die Merkmalsinformationen erfolgreich abgerufen werden, Erfassen eines Parameters, der den erfassten charakteristischen Informationen entspricht, aus dem Speicher (15), und
drahtlos Kommunizieren mit dem RF-Tag (44) durch den Leser/Schreiber gemäß dem erfassten Parameter.

2. Datenspeichervorrichtung (1) nach Anspruch 1, wobei die erfassten charakteristischen Informationen zumindest eine von einer Empfangsintensität des RF-Tags, einem Reflexionswert eines Etiketts, welches das RF-Tag einschließt, einem Transmissionswert des Etiketts oder einem Etikettenabstand für eine Rolle von Etiketten (41), die das Etikett einschließen, sind.

3. Datenspeichervorrichtung (1) nach einem der Ansprüche 1 bis 2, weiter umfassend:
einen Drucker (19), um ein Bild auf ein Etikett zu drucken, wobei der RF-Tag (44) in das Etikett eingebettet ist.

4. Datenspeichervorrichtung (1) nach einem der Ansprüche 1 bis 3, weiter umfassend:
eine Antenne (17), die mit dem Leser/Schreiber (16) verbunden ist..

5. Datenspeichervorrichtung (1) nach einem der Ansprüche 1 bis 4, wobei die charakteristischen Informationen eine Tag-ID für den RF-Tag (44) umfassen.

6. Datenspeichervorrichtung (1) nach einem der Ansprüche 1 bis 5, weiter umfassend:
einen Drucker (19) zum Drucken eines Bildes auf ein Etikett, in dem der RF-Tag (44) eingebettet ist; und
Rollen (22) zum Fördern des Etiketts entlang eines Förderpfades von dem Sensor (24) zu dem Drucker (19), wobei bevorzugt die Rollen (22) umfassen:
einen ersten Satz Rollen; und
einen zweiten Satz Rollen stromabwärts des ersten Satzes Rollen in Bezug auf eine Förderrichtung des Etiketts entlang des Förderpfades.

7. Datenspeicherverfahren für in Etiketten eingebettete RF-Tags (44), wobei das Verfahren umfasst:
Erfassen (act11) von charakteristischen Informationen, die einem RF-Tag zugeordnet sind, über einen Sensor oder einen Tag-Leser/Schreiber;
Abrufen von Merkmalsinformationen aus dem Speicher (15) basierend auf den erfassten charakteristischen Informationen;
wenn die Merkmalsinformationen erfolgreich abgerufen werden, Erhalten eines Parameters (act14), der den charakteristischen Informationen entspricht, wobei der Parameter einer Einstellung für die drahtlose Kommunikation mit dem RF-Tag über den Tag-Leser/Schreiber (16) entspricht; und
drahtlos Kommunizieren mit dem RF-Tag (44) durch den Tag-Leser/Schreiber mit der Einstellung, die gemäß dem erhaltenen Parameter eingestellt ist.

8. Verfahren nach Anspruch 7, wobei die Daten in den RF-Tag über drahtlose Kommunikation durch den Tag-Leser/Schreiber geschrieben werden.

9. Verfahren nach Anspruch 7 oder 8, wobei die charakteristischen Informationen zumindest eine von einer Empfangsintensität des RF-Tags, einem Reflexionswert eines Etiketts, in welches das RF-Tag eingebettet ist, einem Transmissionswert des Etiketts oder einem Etikettenabstand von Etiketten auf einer Etikettenrolle, die das Etikett einschließt, sind.

10. Verfahren nach einem der Ansprüche 7 bis 9, wobei der Sensor eine Kamera ist, die so konfiguriert ist, dass sie Bilder eines Etiketts erhält, in das der RF-Tag eingebettet ist.

11. Verfahren nach einem der Ansprüche 7 bis 10, wobei der RF-Tag in ein Etikett auf einer Etikettenrolle eingebettet ist.

12. Etikettenschreiber, umfassend:
einen Leser/Schreiber zur drahtlosen Kommunikation mit einem in ein Etikett eingebetteten RF-Tag;
Rollen (22), die so konfiguriert sind, dass sie das Etikett entlang eines Förderpfades befördern;
einen Sensor, der konfiguriert ist, um charakteristische Informationen zu erhalten, die dem RF-Tag zugeordnet sind;
einen Speicher, der RF-Tag-Schreibparameter in Verbindung mit charakteristischen Informationen speichert, die dem RF-Tag zugeordnet sind, wobei die Parameter zum Schreiben von Daten in das RF-Tag verwendet werden sollen;
**dadurch gekennzeichnet, dass** der Etikettenschreiber weiter umfasst
einen Prozessor, der konfiguriert ist zum:
Erfassen der charakteristischen Informationen, die dem RF-Tag zugeordnet sind, durch den Sensor und den Leser/Schreiber,
Abrufen von Merkmalsinformationen aus dem Speicher (15) basierend auf den erfassten charakteristischen Informationen;
wenn die Merkmalsinformationen erfolgreich abgerufen werden, Erfassen eines Parameters, der den erfassten charakteristischen Informationen entspricht, und
Schreiben von Daten in den RF-Tag unter Verwendung des Lesers/Schreibers und des erhaltenen Parameters.

13. Etikettenschreiber nach Anspruch 12, wobei sich das Etikett auf einer Etikettenrolle befindet, die eine Vielzahl von Etiketten einschließt.

## Revendications

1. Dispositif de stockage de données (1), comprenant :
un dispositif de lecture/écriture (16) pour communiquer sans fil avec une étiquette RF (44) ;
une mémoire (15) stockant des paramètres en association avec des informations caractéristiques associées à l'étiquette RF (44), les paramètres à utiliser pour communiquer sans fil avec l'étiquette RF (44) ;
un capteur (24) configuré pour obtenir des informations caractéristiques associées à l'étiquette RF ;
**caractérisé en ce que** le dispositif de stockage de données comprend en outre un processeur (111) configuré pour :
acquérir les informations caractéristiques associées à l'étiquette RF (44) par l'intermédiaire du capteur,
récupérer des renseignements à partir de la mémoire (15) sur la base des informations caractéristiques acquises ;
si les renseignements sont récupérés avec succès, acquérir un paramètre correspondant aux informations caractéristiques acquises à partir de la mémoire (15), et
communiquer sans fil avec l'étiquette RF (44) par l'intermédiaire du dispositif de lecture/écriture selon le paramètre acquis.

2. Dispositif de stockage de données (1) selon la revendication 1, dans lequel les informations caractéristiques acquises sont au moins une intensité de réception de l'étiquette RF, une valeur de réflectance d'une étiquette incluant l'étiquette RF, une valeur de transmittance de l'étiquette, ou un pas d'étiquette pour un rouleau d'étiquettes (41) incluant l'étiquette.

3. Dispositif de stockage de données (1) selon l'une quelconque des revendications 1 à 2, comprenant en outre :
une imprimante (19) pour imprimer une image sur une étiquette, dans laquelle l'étiquette RF (44) est intégrée dans l'étiquette.

4. Dispositif de stockage de données (1) selon l'une quelconque des revendications 1 à 3, comprenant en outre :
une antenne (17) connectée au dispositif de lecture/écriture (16).

5. Dispositif de stockage de données (1) selon l'une quelconque des revendications 1 à 4, dans lequel les informations caractéristiques comprennent un identifiant d'étiquette pour l'étiquette RF (44).

6. Dispositif de stockage de données (1) selon l'une quelconque des revendications 1 à 5, comprenant en outre :
une imprimante (19) pour imprimer des images sur une étiquette dans laquelle l'étiquette RF (44) est intégrée ; et
des rouleaux (22) pour transporter l'étiquette le long d'un trajet de transport du capteur (24) à l'imprimante (19), dans lequel de préférence les rouleaux (22) comprennent :
un premier ensemble de rouleaux ; et
un second ensemble de rouleaux en aval du premier ensemble de rouleaux par rapport à une direction de transport de l'étiquette le long du trajet de transport.

7. Procédé de stockage de données pour des étiquettes RF (44) intégrées dans des étiquettes, le procédé comprenant :
l'acquisition (act11) d'informations caractéristiques associées à une étiquette RF via un capteur ou un dispositif de lecture/écriture d'étiquette ;
la récupération de renseignements à partir de la mémoire (15) sur la base des informations caractéristiques acquises ;
si les renseignements sont récupérés avec succès, l'obtention d'un paramètre (actl4) correspondant aux informations caractéristiques, le paramètre correspondant à un réglage pour une communication sans fil avec l'étiquette RF via le dispositif de lecture/écriture d'étiquette (16) ; et
la communication sans fil avec l'étiquette RF (44) par l'intermédiaire du dispositif de lecture/écriture d'étiquette avec l'ensemble de réglages selon le paramètre obtenu.

8. Procédé selon la revendication 7, dans lequel des données sont écrites sur l'étiquette RF via une communication sans fil par l'intermédiaire du dispositif de lecture/écriture d'étiquette.

9. Procédé selon la revendication 7 ou 8, dans lequel les informations caractéristiques sont au moins une intensité de réception de l'étiquette RF, une valeur de réflectance d'une étiquette dans laquelle l'étiquette RF est intégrée, une valeur de transmittance de l'étiquette ou un pas d'étiquette d'étiquettes sur un rouleau d'étiquettes incluant l'étiquette.

10. Procédé selon l'une quelconque des revendications 7 à 9, dans lequel le capteur est une caméra configurée pour obtenir des images d'une étiquette dans laquelle l'étiquette RF est intégrée.

11. Procédé selon l'une quelconque des revendications 7 à 10, dans lequel l'étiquette RF est intégrée dans une étiquette sur un rouleau d'étiquettes.

12. Dispositif d'écriture d'étiquette, comprenant :
un dispositif de lecture/écriture pour communiquer sans fil avec une étiquette RF intégrée dans une étiquette ;
des rouleaux (22) configurés pour transporter l'étiquette le long d'un trajet de transport ;
un capteur configuré pour obtenir des informations caractéristiques associées à l'étiquette RF ;
une mémoire stockant des paramètres d'écriture d'étiquette RF en association avec des informations caractéristiques associées à l'étiquette RF, les paramètres à utiliser pour écrire des données sur l'étiquette RF ;
**caractérisé en ce que** le dispositif d'écriture d'étiquette comprend en outre
un processeur configuré pour :
acquérir des informations caractéristiques associées à l'étiquette RF par l'intermédiaire du capteur et du dispositif de lecture/écriture,
récupérer des renseignements à partir de la mémoire (15) sur la base des informations caractéristiques acquises ;
si les renseignements sont récupérés avec succès, obtenir un paramètre correspondant aux informations caractéristiques acquises, et
écrire des données sur l'étiquette RF à l'aide du dispositif de lecture/écriture et du paramètre obtenu.

13. Dispositif d'écriture d'étiquette selon la revendication 12, dans lequel l'étiquette est sur un rouleau d'étiquettes incluant une pluralité d'étiquettes.
